# EUROPÄISCHE PATENTSCHRIFT

(11) **EP 0 817 525 B1**
(45) Veröffentlichungstag und Bekanntmachung des Hinweises auf die Patenterteilung: **02.08.2006**
(21) Anmeldenummer: 97109673.0
(22) Anmeldetag: 13.06.1997
(51) Int. Cl.: H04Q 11/04

(54) **Verfahren und Anordnungen zur optimalen Nutzung von vermittlungstechnischen und übertragungstechnischen Ressourcen von Multimedia-Kommunikationsnetzen**
Method and arrangement for optimal usage of switching resources and transmission resources of multimedia networks
Méthode et dispositifs pour utilisation optimale des ressources de brassage et des ressources de transfert, dans un réseau multimédia

(30) Priorität: 27.06.1996 DE 19625901
(43) Veröffentlichungstag der Anmeldung: 07.01.1998
(73) Patentinhaber: SIEMENS AKTIENGESELLSCHAFT, 80333 München (DE)
(72) Erfinder: Küchler, Rudolf, Dr., 82065 Baierbrunn (DE)

(56) Entgegenhaltungen:
- EP-A- 0 535 749
- EP-A- 0 565 170
- PATENT ABSTRACTS OF JAPAN vol. 1996, no. 06, 28. Juni 1996 (1996-06-28) -& JP 08 032619 A (HITACHI LTD), 2. Februar 1996 (1996-02-02) -& US 5 673 264 A
- PATENT ABSTRACTS OF JAPAN vol. 1996, no. 06, 28. Juni 1996 (1996-06-28) -& JP 08 032957 A (HITACHI LTD), 2. Februar 1996 (1996-02-02)

## Beschreibung

Verfahren und Anordnungen zur optimalen Nutzung von vermittlungstechnischen und übertragungstechnischen Ressourcen von Multimedia-Kommunikationsnetzen.

Um die Nutzung von Breitband-Multimedia-Diensten wie beispielsweise digitales Verteil-Fernsehen über Multimedia-Kommunikationsnetze zu ermöglichen, werden einzelne an Teilnehmer zu übermittelnde Programme bzw. angeforderte digitale Video-Daten ("Video on Demand", "Multimedia on Demand") übertragungstechnisch einzelnen virtuellen Verbindungen eines ATM-orientierten (Asynchronus Transfer Mode) Multimedia-Kommunikationsnetzes zugeordnet. Für die Auswahl und den Empfang der digitalen Video-Daten benötigt jeder Teilnehmer eine an das Multimedia-Kommunikationsnetz angeschlossene Netzabschlußeinheit, in der Fachwelt als "Set-Top-Box" bekannt, an die über eine konventionelle unidirektionale Schnittstelle, beispielsweise eine SCART-Schnittstelle (Syndicat des Constuctions d'Appareils Radio, Recepteurs et Televiseurs), ein konventionelles TV-Gerät oder ein Multimedia-Endgerät angeschlossen werden kann. Die Auswahl eines aktuellen Programms bzw. der gewünschten digitalen Video-Daten erfolgt über die Fernbedienung der Set-Top-Box. In dieser wird eine, die ausgewählten Video-Daten anzeigende Protokollnachricht gebildet und über eine Teilnehmeranschlußeinheit an eine im Multimedia-Kommunikationsnetz angeordnete Netzkontrolleinheit gesendet. Diese verwaltet die Zuteilung der zur Verfügung stehenden Ressourcen bzw. Bandbreite zwischen der Teilnehmeranschlußeinheit und der Netzkontrolleinheit. Um die optimale Nutzung der zur Verfügung stehenden Ressourcen bzw. Bandbreite zu gewährleisten, also Redundanz beim Transport der Video-Daten zu vermeiden, werden nur die aktuellen, über die Set-Top-Boxen angeforderten Programme bzw. digitalen Video-Daten von der Netzkontrolleinheit an die jeweilige Teilnehmeranschlußeinheit verteilt. Fordert eine Set-Top-Box ein Programm bzw. digitale Video-Daten an, wird von der Netzkontrolleinheit die für die Übertragung der digitalen Video-Daten notwendige Bandbreite bzw. freie virtuelle Verbindung reserviert bzw. zugeteilt, sofern das angeforderte Programm bzw. digitalen Video-Daten nicht bereits für eine andere Set-Top-Box übertragen werden. Wird von der Set-Top-Box das Ende der angeforderten Video-Datenübertragung signalisiert, wird durch die Netzkontrolleinheit die zugeteilte Bitrate bzw. Ressource - d.h. die dafür reservierte virtuelle Verbindung - wieder freigegeben, falls für keine weitere Set-Top-Box die betreffenden digitalen Video-Daten zu übertragen sind.

Bei der Freigabe von Ressourcen, d.h. die Bandbreite der zugeteilten digitalen Video-Daten, tritt nun folgendes Problem auf; schaltet ein Teilnehmer sein an die Set-Top-Box angeschlossenes TV-Gerät ab - z.B. Schaltung in den Stand-by-Modus über Fernbedienung -, ohne der Set-Top-Box die Beendigung der angeforderten Video-Datenübertragung mitzuteilen, kann die Set-Top-Box der Netzkontrolleinheit nicht das Ende der Video-Datenanforderung übermitteln. Falls keine andere Set-Top-Box dasselbe Programm bzw. dieselben digitalen Video-Daten empfängt, bleibt die zugeteilte Bandbreite für das nunmehr ausgeschaltete TV-Gerät zugeteilt, wobei die zugeteilte virtuelle Verbindung ungenutzt bleibt. Im Extremfall sind die vermittlungstechnischen und übertragungstechnischen Ressourcen zwischen der Netzkontrolleinheit und der Teilnehmeranschlußeinheit durch nicht genutzte, jedoch zugeteilte virtuelle Verbindungen blockiert.

In JP8-137770 A ist ein Verfahren zur vermittlungstechnischen und übertragungstechnischen Ressourcen von Kommunikationsnetzen beschrieben, an welche mehrere Kommunikationsendgeräte angeschlossen sind. Durch eine Überwachungseinheit wird der Aktiv- bzw. Inaktiv-Zustand ("OFF Sate") der angeschlossenen Kommunikationsendgeräte überwacht.

Der Erfindung liegt die Aufgabe zugrunde, die Nutzung von vermittlungstechnischen und übertragungstechnischen Ressourcen von Multimedia-Kommunikationsnetzen zu optimieren. Die Aufgabe wird ausgehend von einem Verfahren, einer Kommunikationsanorndung und einer Multimedia-Netzabschlußeinheit gemäß dem jeweiligen Oberbegriff der Patentansprüche 1, 8 und 15 durch die jeweils kennzeichnenden Merkmale gelöst.

Beim erfindungsgemäßen Verfahren zur optimalen Nutzung von vermittlungstechnischen und übertragungstechnischen Ressourcen (vr) von Multimedia-Kommunikationsnetzen ist dem zumindest einem Multimedia-Kommunikationsnetz zumindest ein Multimedia-Kommunikationsendgerät zugeordnet. Für eine Informationsübermittlung zu und/oder von dem zumindest einem Multimedia-Kommunikationsendgerät sind vermittlungstechnische und übertragungstechnische Ressourcen des zumindest einen Multimedia-Kommunikationsnetzes zugeteilt. Der wesentliche Aspekt der vorliegenden Erfindung besteht darin, dass jeweils die Höhe von dem zumindest einen Multimedia-Kommunikationsendgerät zugeführter elektrischer Leistung erfasst wird, wobei bei Überschreiten der erfassten Höhe der zugeführten Leistung über einen vorgebbaren Wert ein Aktiv-Zustand und bei Unterschreiten der erfassten Höhe unter einen vorgebbaren Wert ein Inaktiv-Zustand jeweiligen Multimedia-Kommunikationsendgerätes (TV1...n) bestimmt ist. Zumindest eine den Aktiv- bzw. Inaktiv-Zustand repräsentierende Zustands-Information wird an das zumindest eine Multimedia-Kommunikationsnetz übermittelt, wobei in Abhängigkeit von der zumindest einen übermittelten Zustands-Information (pn) die zugeteilten vermittlungstechnischen und übertragungstechnischen Ressourcen (zr) zugeteilt bleiben oder freigegeben werden.

Vorteilhaft wird das Ergebnis der Überprüfung des Aktiv-Zustandes und/oder des Inaktiv-Zustandes der Multimedia-Kommunikationsendgeräte an eine Netzkontrolleinheit gemeldet, welche mit Hilfe des gemeldeten Überprüfungsergebnisses die den einzelnen Multimedia-Kommunikationsendgeräten zugeteilten vermittlungstechnischen und übertragungstechnischen Ressourcen eines zwischen der Netzkontrolleinheit und einer Teilnehmeranschlußeinheit angeordneten Multimedia-Kommunikationsnetzes zugeteilt hält oder freigibt, wobei die Netzkontrolleinheit mit einem übergeordneten Multimedia-Kommunikationsnetz und die Teilnehmeranschlußeinheit über eine Multimedia-Netzabschlußeinheit (Set-Top-Box) mit zumindest einem Multimedia-Kommunikationsendgerät verbunden ist. Durch das Überprüfen und Melden des Aktiv-Zustandes und/oder des Inaktiv-Zustandes von an das Multimedia-Kommunikationsnetz angebundenen Multimedia-Kommunikationsendgeräten werden die Ressourcen, d.h. die Bandbreite eines zwischen der Netzkontrolleinheit und einer Teilnehmeranschlußeinheit angeordneten Multimedia-Kommunikationsnetzes, optimal genutzt, da zugeteilte, ungenutzte Bandbreite bzw. zugeteilte, ungenutzte virtuelle Verbindungen durch die Netzkontrolleinheit freigegeben werden.

Besonders effektiv und daher wirtschaftlich kann der Aktiv-Zustand und/oder der Inaktiv-Zustand der über die Multimedia-Netzabschlußeinheit mit dem Multimedia-Kommunikationsnetz verbundenen Multimedia-Kommunikationsendgeräte festgestellt werden, indem jeweils die Höhe der den einzelnen Multimedia-Kommunikationsendgeräten zugeführten elektrischen Leistung erfaßt und daraus die Höhe der zugeführten elektrischen Leistung repräsentierende Leistungs-Meßwerte gebildet werden. Diese werden derart bewertet, daß bei Überschreiten eines elektrischen Leistungs-Meßwertes über einen vorgebbaren Wert der Aktiv-Zustand des jeweiligen Multimedia-Kommunikationsendgerätes und bei Unterschreiten eines elektrischen Leistungs-Meßwertes unter den vorgebbaren Wert der Inaktiv-Zustand des jeweiligen Multimedia-Kommunikationsendgerätes bestimmt ist und der Aktiv- bzw. Inaktiv-Zustand an die Netzkontrolleinheit übermittelt wird - Anspruch 5. Ebenso können nach einer weiteren vorteilhaften Ausgestaltungs-Variante die gebildeten Leistungs-Meßwerte derart bewertet werden, daß bei Anstieg eines Leistungs-Meßwertes um einen Differenzbetrag der Aktiv-Zustand des jeweiligen Multimedia-Kommunikationsendgerätes und bei Abfall eines Leistungs-Meßwertes um den Differenzbetrag der Inaktiv-Zustand des jeweiligen Multimedia-Kommunikationsendgerätes bestimmt ist. Die Höhe der den Multimedia-Kommunikationsendgeräten jeweils zugeführten elektrischen Leistung kann besonders einfach und mit geringem schaltungstechnischen Aufwand durch eine Spannungs-, Strom- oder Leistungsmessung ermittelt werden.

Die Mittel zur Überprüfung des Aktiv-Zustandes und/oder des Inaktiv-Zustandes des zumindest einen über eine Multimedia-Netzabschlußeinheit und einer Teilnehmeranschlußeinheit mit dem Multimedia-Kommunikationsnetz verbundenen Multimedia-Kommunikationsendgerätes können, abhängig vom wirtschaftlichen Aufwand, unterschiedlich realisiert werden. Gemäß einer ersten Ausgestaltungs-Variante können diese in der Multimedia-Netzabschlußeinheit realisiert werden.In einer zweiten Ausgestaltungs-Variante können die Mittel zur Überprüfung des Aktiv-Zustandes und/oder des Inaktiv-Zustandes eines Multimedia-Kommunikationsendgerätes ebenso in das Multimedia-Kommunikationsendgerät integriert werden. Als dritte Ausgestaltungs-Variante können die Mittel zur Überprüfung des Aktiv-Zustandes und/oder des Inaktiv-Zustandes der Multimedia-Kommunikationsendgeräte in einer separaten, zwischen Multimedia-Kommunikationsendgerät und Multimedia-Netzabschlußeinheit angeordneten Erfassungseinheit realisiert werden.

Weitere vorteilhafte Ausgestaltungen der einzelnen Varianten sind den weiteren Ansprüchen zu entnehmen.

Im folgenden wird anhand eines Blockschaltbildes das erfindungsgemäße Verfahren näher erläutert.

Das Blockschaltbild zeigt ein zwischen einer Netzkontrolleinheit OLT und einer Teilnehmeranschlußeinheit ONU angeordnetes und nach dem Asynchron Transfer Modus (ATM) konzipiertes Multimedia-Kommunikationsnetz BPON. In diesem beträgt beispielsweise die Höhe der Daten-Übertragungsrate in Richtung Teilnehmeranschlußeinheit ONU (downstream) 622 Mbit/s und in Richtung Netzkontrolleinheit OLT (upstream) 200 Mbit/s. Die Netzkontrolleinheit OLT ist über Lichtwellenleiter LWL an ein übergeordnetes Multimedia-Kommunikationsnetz OKN angebunden und repräsentiert den Netzabschluß des übergeordneten Multimedia-Kommunikationsnetzes OKN. Durch Nutzung der Bandbreite des Lichtwellenleiters LWL werden m virtuelle, digitale Video-Daten übermittelnde Verbindungen an die Netzkontrolleinheit OLT herangeführt. Im Teilnehmeranschlußbereich ACCESS sind über die Teilnehmeranschlußeinheit ONU mehrere, mit der Netzversorgungsspannung U₀ verbundene Multimedia-Netzabschlußeinheiten STB1...n, im folgenden als "Set-Top-Boxen" bezeichnet, über Glasfaserkabel oder Kupferleitungen mit dem Multimedia-Kommunikationsnetz BPON verbunden. An ein in der Set-Top-Box STB1...n realisiertes Schnittstellenmodul SCART ist über ein Fernsehkabel FK ein konventionelles Fernsehgerät TV1...n angeschlossen.

Über die Fernbedienung der Set-Top-Box STB1...n - üblicherweise drahtlos - können angebotene, an die Netzkontrolleinheit OLT herangeführte digitale Video-Daten - z.B. kommerzielle Fernsehprogramme bzw. Spielfilme ("Video on Demand", "Pay-TV) - angefordert werden. Hierzu bildet die Set-Top-Box STB1...n eine entsprechende, die Anforderung enthaltende Protokollnachricht pn und sendet diese über die Teilnehmeranschlußeinheit ONU und über das im Teilnehmeranschlußbereich ACCESS angeordnete Multimedia-Kommunikationsnetz BPON an die Netzkontrolleinheit OLT, welche die Zuordnung der über das übergeordnete Multimedia-Kommunikationsnetz OKN herangeführten m virtuellen Verbindungen zu den limitierten Ressourcen des Multimedia-Kommunikationsnetz BPON - beispielsweise 622 Mbit/s -, d.h. der beschränkten Anzahl n (n < m) für einen Datentransport zuteilbaren, virtuellen Verbindungen verwaltet. Bei Breitbandals auch Schmalband-Diensten (z.B. Telefon und Fax) ist das aktuelle Verkehrsaufkommen - "bursty traffic" - über das Multimedia-Kommunikationsnetz BPON nicht vorhersehbar. Um die limitierten Ressourcen des Multimedia-Kommunikationsnetzes BPON optimal zu nutzen, werden nur die von den Set-Top-Boxen STB1...n angeforderten digitalen Video-Daten über die beschränkte Anzahl n (n < m) der für einen Datentransport zur Verfügung stehenden virtuellen Verbindungen über das Multimedia-Kommunikationsnetz BPON geführt. Um Redundanz, d.h. Mehrfachübertragung der digitalen Video-Daten von der Netzkontrolleinheit OLT über das Multimedia-Kommunikationsnetzes BPON zu der Teilnehmeranschlußeinheit ONU zu vermeiden, wird bei einer mehrfachen Anforderung derselben digitalen Video-Daten von verschiedenen Set-Top-Boxen STB1...n nur eine virtuelle Verbindung durch die Netzkontrolleinheit OLT zugeteilt; die angeforderten digitalen Video-Daten werden durch die Teilnehmeranschlußeinheit ONU zu den jeweiligen Set-Top-Boxen STB1...n verteilt. Signalisiert eine Set-Top-Box STB1...n durch eine entsprechende Protokollnachricht pn das Ende einer Datenanforderung, wird durch die Netzkontrolleinheit OLT die für die Übertragung der digitalen Video-Daten zugeteilte virtuelle Verbindung, d.h. die zugeteilte Ressource bzw. zugeteilte Bandbreite, wieder freigegeben, falls für keine weitere Set-Top-Box STB1...n die betreffenden digitalen Video-Daten über das Multimedia-Kommunikationsnetz BPON zu übertragen sind.

Gemäß einer ersten vorteilhaften Ausgestaltungsvariante des erfindungsgemäßen Verfahrens ist das mit der Set-Top-Box STB1 verbundene Fernsehgerät TV1 über eine Netzleitung NL1 mit einer in der Set-Top-Box STB1 angeordneten Energieversorgungseinheit EV1 verbunden und wird von dieser mit Spannung und Strom versorgt. Dadurch daß die Energieversorgung des Fernsehgerätes TV1 über die Set-Top-Box STB1 erfolgt, kann ein Schalten des Fernsehgerätes TV1 in den Inaktiv-Zustand bzw. ein Schalten in den Standby-Modus , was einen Abbruch der Übertragung von angeforderten digitalen Video-Daten bedeutet, über die Set-Top-Box STB1 erfaßt werden. Dazu ist der in der Set-Top-Box STB1 angeordneten Energieversorgungseinheit EV1 eine Meßeinrichtung SM1 zur Messung der aktuellen Stromstärke des dem Fernsehgerät TV1 zugeführten Stromes beigeordnet. Die Meßwerte der durch die Meßeinrichtung SM1 in regelmäßigen Abständen gemessenen Stromstärke werden über eine Verbindungsleitung VL einer ebenfalls in der Set-Top-Box STB1 angeordneten Bewertungseinheit BE1 zugeführt. Beim Ausschalten des Fernsehgerätes TV1 bzw. Schaltung in den Standby-Modus geht die von der Meßeinrichtung SM1 gemessene Stromstärke signifikant zurück. Unterschreitet die gemessene Stromstärke einen beliebig vorgebbaren Schwellwert - durch Einführen eines Schwellwertes kann der "Standby-Modus" erfaßt werden - wird von der Bewertungseinheit BE1 der Inaktiv-Zustand des Fernsehgerätes TV1 erkannt und in der Set-Top-Box STB1 eine entsprechende Protokollnachricht pn gebildet. Diese wird über die Teilnehmeranschlußeinheit ONU und das Multimedia-Kommunikationsnetz BPON an die Netzkontrolleinheit OLT gesendet - durch gepunktete Linien angedeutet. Nach Auswertung der übermittelten Protokollnachricht pn in der Netzkontrolleinheit OLT, werden unter Berücksichtigung der genannten Bedingungen die zugeteilten Ressourcen zr, d.h. die für die Übertragung der digitalen Video-Daten zugeteilte virtuelle Verbindung - beispielsweise mit einer Übertragungsrate von 5 Mbit/s - wieder freigegeben.

Gemäß einer weiteren vorteilhaften Ausgestaltungsvariante des erfindungsgemäßen Verfahrens ist zwischen der Set-Top-Box STBn und dem über ein Fernsehkabel FK daran angeschlossen Fernsehgerät TVn eine separate, mit der Netzversorgungsspannung U₀ verbundene Erfassungseinheit EE angeordnet. Im Gegensatz zu der bereits genannten Ausgestaltungsvariante wird das Fernsehgerät TVn über eine Netzleitung NLn von einer in der Erfassungseinheit EE angeordneten Energieversorgungseinheit EVn mit Energie bzw. Spannung und Strom versorgt. Um ein Schalten des Fernsehgerätes TVn in den Inaktiv-Zustand zu erfassen, und um damit einen Abbruch der Übertragung von angeforderten digitalen Video-Daten zu veranlassen, ist der Energieversorgungseinheit EVn eine Meßeinrichtung SMn zur Messung der aktuellen Stromstärke des dem Fernsehgerät TVn zugeführten Stromes beigeordnet, wobei die Meßwerte der in regelmäßigen Abständen gemessenen Stromstärke über eine Verbindungsleitung VL einer in der Erfassungseinheit EE angeordneten Bewertungseinheit BEn zugeführt werden. Fällt die Stromstärke unter einen beliebig vorgebbaren Schwellwert, wird von der Bewertungseinheit BEn der Inaktiv-Zustand des Fernsehgerätes TVn festgestellt und ein Inaktiv-Zustands-Signal i gebildet, welches über einen Ausgang A der Erfassungseinheit EE und eine Signalisierungsleitung SL an einen Eingang SE der Set-Top-Box STBn geführt wird. In dieser wird eine das Ende der Übertragung der digitalen Video-Daten enthaltende Protokollnachricht pn gebildet und über die Teilnehmeranschlußeinheit ONU und das Multimedia-Kommunikationsnetz BPON an die Netzkontrolleinheit OLT weitergeleitet, wobei zugeteilte Ressourcen zr in der beschriebenen Art und Weise freigegeben werden. Überschreitet die Stromstärke den beliebig vorgebbaren Schwellwert, wird von der Bewertungseinheit BEn der Aktiv-Zustand des Fernsehgerätes TVn festgestellt und ein Aktiv-Zustands-Signal a gebildet, welches über den Ausgang A der Erfassungseinheit EE und die Signalisierungsleitung SL an den Eingang SE der Set-Top-Box STBn geführt wird. Gemäß dem erfindungsgemäßen Verfahren wird bei Anforderung von digitalen Video-Daten nur dann eine entsprechende, die Anforderung enthaltende Protokollnachricht pn in der Set-Top-Box STBn gebildet, wenn ein in der Erfassungseinheit EE generiertes Aktiv-Zustands-Signal a über die Signalisierungsleitung SL an den Eingang SE der Set-Top-Box STBn herangeführt wird; d.h. nur bei eingeschalteten, bzw. in den Aktiv-Zustand geschalteten Fernsehgerät TVn werden die für die Übertragung der digitalen Video-Daten notwendigen Ressourcen zr durch die Set-Top-Box STBn angefordert.

Die in der beschriebenen Erfassungseinheit EE angeordnete Meßeinrichtung SMn zur Messung der aktuellen Stromstärke des dem Fernsehgerät TVn zugeführten Stromes sowie die Bewertungseinheit BEn zur Bildung eines Aktiv-Zustands-Signals a können nach einer weiteren nicht dargestellten Ausgestaltungsvariante auch in dem jeweiligen Fernsehgerät TV, dessen Aktiv-Zustand und/oder Inaktiv-Zustand erfaßt werden soll, realisiert werden; das gebildete Aktiv-Zustands-Signal a bzw. Inaktiv-Zustands-Signal i wird dabei über eine Verbindungsleitung VL direkt an einen Eingang SE der Set-Top-Box STB geführt.

Durch die beschriebene Ausgestaltung des erfindungsgemäßen Verfahrens werden die übertragungstechnischen und vermittlungstechnischen Ressourcen vr eines zwischen der Netzkontrolleinheit OLT und der Teilnehmeranschlußeinheit ONU angeordneten Multimedia-Kommunikationsnetzes BPON optimal genutzt, da zugeteilte, über das Multmedia-Kommunikationsnetz BPON geführte, ungenutzte virtuelle Verbindungen durch die Netzkontrolleinheit OLT nicht aktiviert bzw. freigegeben werden, und somit die Verfügbarkeit von Breitband- und Schmalband-Diensten der Multimadia-Anordnung erhalten bleibt.

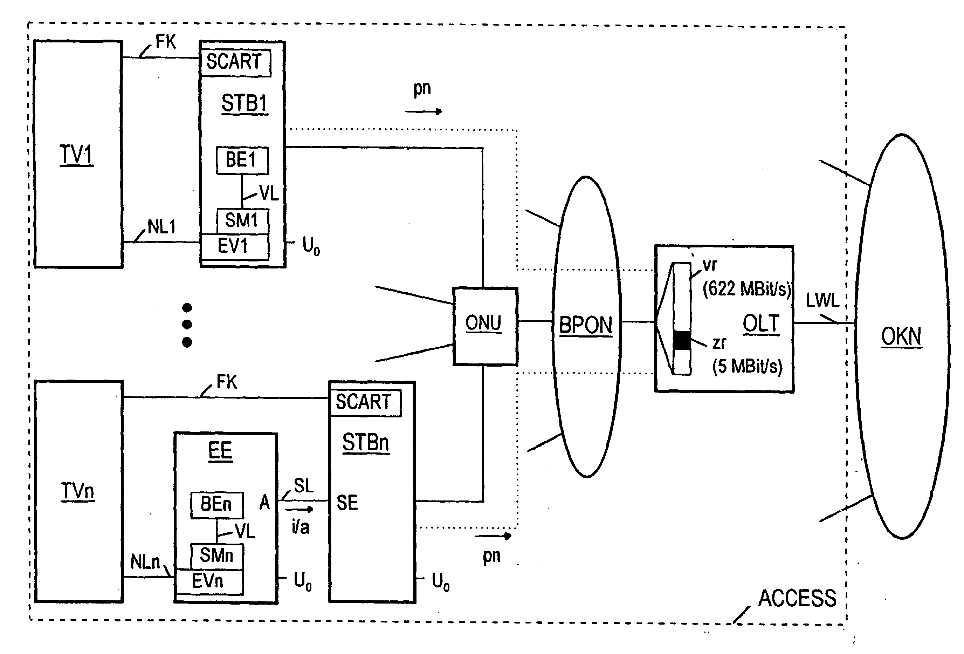

## Patentansprüche

1. Verfahren zur optimalen Nutzung von vermittlungstechnischen und übertragungstechnischen Ressourcen (vr) von Multimedia-Kommunikationsnetzen (BPON),
- bei dem zumindest einem Multimedia-Kommunikationsnetz (BPON) zumindest ein Multimedia-Kommunikationsendgerät (TV1...n) zugeordnet ist,
- bei dem für eine Informationsübermittlung zu und/oder von dem zumindest einem Multimedia-Kommunikationsendgerät (TV1...n) vermittlungstechnische und übertragungstechnische Ressourcen (zr) des zumindest einen Multimedia-Kommunikationsnetzes (BPON) zugeteilt sind,
**dadurch gekennzeichnet,**
- **dass** jeweils die Höhe von dem zumindest einen Multimedia-Kommunikationsendgerät (TV1...n)zugeführter elektrischer Leistung erfasst wird, wobei bei Überschreiten der erfassten Höhe der zugeführten Leistung über einen vorgebbaren Wert ein Aktiv-Zustand und bei Unterschreiten der erfassten Höhe unter einen vorgebbaren Wert ein Inaktiv-Zustand jeweiligen Multimedia-Kommunikationsendgerätes (TV1...n)bestimmt ist, und
- **dass** zumindest eine den Aktiv- bzw. Inaktiv-Zustand repräsentierende Zustands-Information an das zumindest eine Multimedia-Kommunikationsnetz übermittelt wird, und
- **dass** in Abhängigkeit von der zumindest einen übermittelten Zustands-Information (pn) die zugeteilten vermittlungstechnischen und übertragungstechnischen Ressourcen (zr) zugeteilt bleiben oder freigegeben werden.

2. Verfahren nach Anspruch 1,
**dadurch gekennzeichnet,**
**dass** in Abhängigkeit von der zumindest einen übermittelten Zustands-Information (pn) die für eine Informationsübermittlung zu und/oder von dem zumindest einem Multimedia-Kommunikationsendgerät (TV1...n) erforderlichen vermittlungstechnischen und übertragungstechnischen Ressourcen (zr) des zumindest einen Multimedia-Kommunikationsnetzes (BPON) angefordert werden.

3. Verfahren nach einem der vorherigen Ansprüche,
**dadurch gekennzeichnet,**
**dass** das zumindest eine Multimedia-Kommunikationsnetz (BPON) zwischen zumindest einer Netzkontrolleinheit (OLT) und zumindest einer Teilnehmeranschlusseinheit (ONU) angeordnet ist, wobei
- die zumindest eine Netzkontrolleinheit (OLT) mit zumindest einem übergeordneten Multimedia-Kommunikationsnetz (OKN) verbunden ist, und
- das zumindest eine Multimedia-Kommunikationsendgerät (TV1...n) über zumindest eine Multimedia-Netzabschlusseinheit (STB1...n) an die zumindest eine Teilnehmeranschlusseinheit (ONU) angeschlossen ist.

4. Verfahren nach einem der vorherigen Ansprüche,
**dadurch gekennzeichnet,**
**dass** die vermittlungstechnischen und übertragungstechnischen Ressourcen (vr) des Multimedia-Kommunikationsnetzes (BPON) durch zumindest eine nach dem Asynchronen Transfer Modus wirkende virtuelle Verbindung realisiert sind.

5. Verfahren nach Anspruch 4,
**dadurch gekennzeichnet,**
**dass** die zumindest eine virtuelle Verbindung zumindest einer im Multimedia-Kommunikationsnetz (BPON) oder im übergeordneten Multimedia-Kommunikationsnetz (OKN) angeordneten Multimedia-Datenquelle zugeordnet ist.

6. Verfahren nach einem der vorherigen Ansprüche,
**dadurch gekennzeichnet,**
**dass** die Höhe der dem zumindest einem Multimedia-Kommunikationsendgerät (TV1...n) zugeführten elektrischen Leistung durch eine Spannungs- oder Strom- oder Leistungsmessung ermittelt wird.

7. Verfahren nach einem der vorherigen Ansprüche,
**dadurch gekennzeichnet,**
**dass** die Zustands-Information (pn) in eine an das zumindest eine Multimedia-Kommunikationsnetz (BPON) angepasste Protokollnachricht eingefügt wird.

8. Kommunikationsanordnung zur optimalen Nutzung von vermittlungstechnischen und übertragungstechnischen Ressourcen (vr) von Multimedia-Kommunikationsnetzen (BPON),
mit zumindest einem dem zumindest einem Multimedia-Kommunikationsnetz (BPON) zugeordneten Multimedia-Kommunikationsendgerät (TV1...n),
mit Ressourcen-Zuteilungsmitteln zum Zuteilen von vermittlungstechnischen und übertragungstechnischen Ressourcen (zr) des zumindest einen Multimedia-Kommunikationsnetzes (BPON) für eine Informationsübermittlung zu und/oder von dem zumindest einem Multimedia-Kommunikationsendgerät (TV1...n),
**dadurch gekennzeichnet,**
- **dass**
-- Erfassungsmittel zum Erfassen der Höhe von dem zumindest einem Multimedia-Kommunikationsendgerät (TV1...n) zugeführter elektrischer Leistung und zur Bestimmung eines Aktiv- oder Inaktiv-Zustandes des jeweiligen Multimedia-Kommunikationsendgerätes (TV1...n) in Abhängigkeit von dem Erfassungsergebnis,
-- Generierungsmittel zum Generieren von zumindest einer den jeweiligen Aktiv-Zustand und/oder den Inaktiv-Zustand repräsentierenden Zustands-Information (pn), und
-- Übermittlungsmittel zum Übermitteln der zumindest einen Zustands-Information (pn) an das zumindest eine Multimedia-Kommunikationsnetz (BPON)
vorgesehen sind,
- **dass** die Erfassungsmittel derart ausgestaltet sind, dass bei Überschreiten der erfassten Höhe der zugeführten elektrischen Leistung über einen vorgebbaren Wert der Aktiv-Zustand und bei Unterschreiten der erfassten Höhe unter einen vorgebbaren Wert der Inaktiv-Zustand des jeweiligen Multimedia-Kommunikationsendgerätes (TV1...n) bestimmt ist
- **dass** die Ressourcen-Zuteilungsmittel derart ausgestaltet sind, dass in Abhängigkeit von der zumindest einen übermittelten Zustands-Information (pn) die zugeteilten vermittlungstechnischen und übertragungstechnischen Ressourcen (zr) zugeteilt bleiben oder freigegeben werden.

9. Kommunikationsanordnung nach Anspruch 8,
**dadurch gekennzeichnet,**
**dass** die Ressourcen-Zuteilungsmittel in der Art und Weise ausgestaltet sind, dass in Abhängigkeit von der zumindest einen übermittelten Zustands-Information (pn) die für eine Informationsübermittlung zu und/oder von dem zumindest einem Multimedia-Kommunikationsendgerät (TV1...n)erforderlichen vermittlungstechnischen und übertragungstechnischen Ressourcen (zr) des zumindest einen Multimedia-Kommunikationsnetzes (BPON) angefordert werden.

10. Kommunikationsanordnung nach Anspruch 8 oder 9,
**dadurch gekennzeichnet,**
**dass** das zumindest eine Multimedia-Kommunikationsnetz (BPON) zwischen zumindest einer Netzkontrolleinheit (OLT) und zumindest einer Teilnehmeranschlusseinheit (ONU) angeordnet ist, wobei
- die zumindest eine Netzkontrolleinheit (OLT) mit zumindest einem übergeordneten Multimedia-Kommunikationsnetz (OKN) verbunden ist, und
- das zumindest eine Multimedia-Kommunikationsendgerät (TV1...n) über zumindest eine Multimedia-Netzabschlusseinheit (STB1...n) an die zumindest eine Teilnehmeranschlusseinheit (ONU) angeschlossen ist.

11. Kommunikationsanordnung nach einem der Ansprüche 8 bis 10,
**dadurch gekennzeichnet,**
**dass** das zumindest eine Multimedia-Kommunikationsnetz (BPON) gemäß dem Asynchronen Transfer Modus ausgestaltet ist,
**dass** die vermittlungstechnischen und übertragungstechnischen Ressourcen des zumindest einen Multimedia-Kommunikationsnetzes (BPON) durch zumindest eine nach dem Asynchronen Transfer Modus wirkende virtuelle Verbindung realisiert ist.

12. Kommunikationsanordnung nach Anspruch 11,
**dadurch gekennzeichnet,**
**dass** die zumindest eine virtuelle Verbindung zumindest einer im Multimedia-Kommunikationsnetz (BPON) oder im übergeordneten Multimedia-Kommunikationsnetz (OKN) angeordneten Datenquelle zugeordnet ist.

13. Kommunikationsanordnung nach einem der Ansprüche 10 bis 12,
**dadurch gekennzeichnet,**
**dass** die Erfassungsmittel, die Generierungsmittel und die Übermittlungsmittel in der zumindest einen Multimedia-Netzabschlusseinheit (STB1...n) angeordnet sind.

14. Kommunikationsanordnung nach einem der Ansprüche 8 bis 13,
**dadurch gekennzeichnet,**
**dass** die Erfassungsmittel derart ausgestaltet sind, dass die Höhe der dem zumindest einem Multimedia-Kommunikationsendgerät (TV1...n) zugeführten elektrischen Leistung durch eine Spannungs- oder Strom- oder Leistungsmessung ermittelt wird.

15. Multimedia-Netzabschlusseinheit (STB1...n) zum Anschluss von zumindest einem Multimedia-Kommunikationsendgerät (TV1) an zumindest ein Multimedia-Kommunikationsnetz (BPON),
**dadurch gekennzeichnet,**
**dass** in der Multimedia-Netzabschlusseinheit (STB1...n)
-- Erfassungsmittel zum Erfassen der Höhe von dem zumindest einem Multimedia-Kommunikationsendgerät (TV1...n) zugeführter elektrischer Leistung und zur Bestimmung eines Aktiv- oder Inaktiv-Zustandes des jeweiligen Multimedia-Kommunikationsendgerätes (TV1...n) in Abhängigkeit von dem Erfassungsergebnis,
-- Generierungsmittel zum Generieren von zumindest einer den jeweiligen Aktiv-Zustand und/oder den Inaktiv-Zustand repräsentierenden Zustands-Information (pn), und
-- Übermittlungsmittel zum Übermitteln der zumindest einen Zustands-Information (pn) an das zumindest eine Multimedia-Kommunikationsnetz (BPON)
angeordnet sind
- **dass** die Erfassungsmittel derart ausgestaltet sind, dass bei Überschreiten der erfassten Höhe der zugeführten elektrischen Leistung über einen vorgebbaren Wert der Aktiv-Zustand und bei Unterschreiten der erfassten Höhe unter einen vorgebbaren Wert der Inaktiv-Zustand des jeweiligen Multimedia-Kommunikationsendgerätes (TV1...n) bestimmt ist.

16. Multimedia-Netzabschlusseinheit (STB1...n) nach Anspruch 15,
**dadurch gekennzeichnet,**
**dass** Energieversorgungsmittel (EV1) zur Energieversorgung des zumindest einen angeschlossenen Multimedia-Kommunikationsendgerätes (TV1) vorgesehen sind, wobei die Erfassungsmittel den Energieversorgungsmitteln (EV1) zugeordnet sind.

17. Multimedia-Netzabschlusseinheit (STB1...n) nach Anspruch 15 oder 16,
**dadurch gekennzeichnet,**
**dass** die Erfassungsmittel derart ausgestaltet sind, dass die Höhe der dem zumindest einem Multimedia-Kommunikationsendgerät (TV1...n) zugeführten elektrischen Leistung durch eine Spannungs- oder Strom- oder Leistungsmessung ermittelt wird.

## Claims

1. Method for the optimal use of switching-oriented and transmission-oriented resources (vr) of multimedia communication networks (BPONI),
- wherein at least one multimedia communication terminal (TV1...n) is assigned to at least one multimedia communication network (BPON),
- wherein switching-oriented and transmission-oriented resources (zr) of the at least one multimedia communication network (BPON) are allocated for the purpose of transmitting information to and/or from the at least one multimedia communication terminal (TV1...n),
**characterised in that**
- in each case the level of electrical power supplied to the at least one multimedia communication terminal (TV1...n) is recorded, an active state of the respective multimedia communication terminal (TV1...n) being determined if the recorded level of the supplied power exceeds a predefinable value and an inactive state of the respective multimedia communication terminal (TV1...n) being determined if the recorded level falls below a predefinable value, and
- at least one item of status information representing the active or inactive state is transmitted to the at least one multimedia communication network, and
- the allocated switching-oriented and transmission-oriented resources (zr) remain allocated or are released as a function of the at least one item of status information (pn) transmitted.

2. Method according to claim 1,
**characterised in that**
the switching-oriented and transmission-oriented resources (zr) of the at least one multimedia communication network (BPON) that are required for transmitting information to and/or from the at least one multimedia communication terminal (TV1...n) are requested as a function of the at least one item of status information (pn) transmitted.

3. Method according to one of the preceding claims,
**characterised in that**
the at least one multimedia communication network (BPON) is arranged between at least one network control unit (OLT) and at least one subscriber connection unit (ONU), wherein
- the at least one control unit (OLT) is connected to at least one higher-level multimedia communication network (OKN), and
- the at least one multimedia communication terminal (TV1...n) is connected via at least one multimedia network termination unit (STB1...n) to the at least one subscriber connection unit (ONU).

4. Method according to one of the preceding claims,
**characterised in that**
the switching-oriented and transmission-oriented resources (vr) of the multimedia communication network (BPON) are implemented by means of at least one virtual connection operating according to the Asynchronous Transfer Mode.

5. Method according to claim 4,
**characterised in that** the at least one virtual connection is assigned to at least one multimedia data source disposed in the multimedia communication network (BPON) or in the higher-level multimedia communication network (OKN).

6. Method according to one of the preceding claims,
**characterised in that** the level of electrical power supplied to the at least one multimedia communication terminal (TV1...n) is determined by means of a voltage or current or power measurement.

7. Method according to one of the preceding claims,
**characterised in that** the status information (pn) is inserted into a protocol message that is adapted to the at least one multimedia communication network (BPON).

8. Communication arrangement for the optimal use of switching-oriented and transmission-oriented resources (vr) of multimedia communication networks (BPON), having at least one multimedia communication terminal (TV1...n) assigned to the at least one multimedia communication network (BPON), having resource allocation means for allocating switching-oriented and transmission-oriented resources (zr) of the at least one multimedia communication network (BPON) for the purpose of transmitting information to and/or from the at least one multimedia communication terminal (TV1...n),
**characterised in**
- **that** the following are provided:
-- recording means for registering the level of electrical power supplied to the at least one multimedia communication terminal (TV1...n) and for determining an active or inactive state of the respective multimedia communication terminal (TV1...n) as a function of the recording result,
-- generating means for generating at least one item of status information (pn) representing the respective active state and/or the inactive state, and
-- transmitting means for transmitting the at least one item of status information (pn) to the at least one multimedia communication network (BPON),
- **that** the recording means are embodied such that the active state of the respective multimedia communication terminal (TV1...n) is determined if the recorded level of the supplied power exceeds a predefinable value and the inactive state of the respective multimedia communication terminal (TV1...n) is determined if the recorded level falls below a predefinable value,
- **that** the resource allocation means are embodied such that the allocated switching-oriented and transmission-oriented resources (zr) remain allocated or are released as a function of the at least one item of status information (pn) transmitted.

9. Communication arrangement according to claim 8,
**characterised in that**
the resource allocation means are embodied in such a way that the switching-oriented and transmission-oriented resources (zr) of the at least one multimedia communication network (BPON) that are required for the purpose of transmitting information to and/or from the at least one multimedia communication terminal (TV1...n) are requested as a function of the at least one item of status information (pn) transmitted.

10. Communication arrangement according to claim 8 or 9,
**characterised in that**
the at least one multimedia communication network (BPON) is arranged between at least one network control unit (OLT) and at least one subscriber connection unit (ONU),
wherein
- the at least one network control unit (OLT) is connected to at least one higher-level multimedia communication network (OKN), and
- the at least one multimedia communication terminal (TV1...n) is connected to the at least one subscriber connection unit (ONU) via at least one multimedia network termination unit (STB1...n).

11. Communication arrangement according to one of the claims 8 to 10,
**characterised in that**
the at least one multimedia communication network (BPON) is embodied in accordance with the Asynchronous Transfer Mode, and the switching-oriented and transmission-oriented resources of the at least one multimedia communication network (BPON) are implemented by means of at least one virtual connection operating according to the Asynchronous Transfer Mode.

12. Communication arrangement according to claim 11,
**characterised in that** the at least one virtual connection is assigned to at least one data source arranged in the multimedia communication network (BPON) or in the higher-level multimedia communication network (OKN).

13. Communication arrangement according to one of the claims 10 to 12,
**characterised in that**
the recording means, the generating means and the transmitting means are arranged in the at least one multimedia network termination unit (STB1...n).

14. Communication arrangement according to one of the claims 8 to 13,
**characterised in that** the recording means are embodied such that the level of the electrical power supplied to the at least one multimedia communication terminal (TV1...n) is determined by means of a voltage or current or power measurement.

15. Multimedia network termination unit (STB1...n) for connecting at least one multimedia communication terminal (TV1) to at least one multimedia communication network (BPON),
**characterised in that**
arranged in the multimedia network termination unit (STB1...n) are
-- recording means for registering the level of electrical power supplied to the at least one multimedia communication terminal (TV1...n) and for determining an active or inactive state of the respective multimedia communication terminal (TV1...n) as a function of the recording result,
-- generating means for generating at least one item of status information (pn) representing the respective active state and/or the inactive state, and
-- transmitting means for transmitting the at least one item of status information (pn) to the at least one multimedia communication network (BPON),
- that the recording means are embodied such that the active state of the respective multimedia communication terminal (TV1...n) is determined if the recorded level of the supplied electrical power exceeds a predefinable value and the inactive state of the respective multimedia communication terminal (TV1...n) is determined if the recorded level falls below a predefinable value.

16. Multimedia network termination unit (STB1...n) according to claim 15,
**characterised in that** power supply means (EV1) are provided for supplying power to the at least one connected multimedia communication terminal (TV1), with the recording means being assigned to the power supply means (EV1).

17. Multimedia network termination unit (STB1...n) according to claim 15 or 16,
**characterised in that**
the recording means are embodied such that the level of the electrical power supplied to the at least one multimedia communication terminal (TV1...n) is determined by means of a voltage or current or power measurement.

## Revendications

1. Méthode pour l'utilisation optimale de ressources de commutation et de transmission (vr) de réseaux de communication multimédia (BPON),
- dans laquelle il est attribué à au moins un réseau de communication multimédia (BPON) au moins un terminal de communication multimédia (TV1...n),
- dans laquelle, en vue d'une transmission d'information à destination et/ou en provenance dudit au moins un terminal de communication multimédia (TV1...n), des ressources de commutation et de transmission (zr) dudit au moins un réseau de communication (BPON) sont assignées,
**caractérisée en ce que**
- à chaque fois le niveau d'une puissance électrique amenée audit au moins un terminal de communication multimédia (TV1...n) est détecté, et lorsque le niveau détecté de la puissance amenée est supérieur à une valeur prédéfinissable, un état actif est déterminé et lorsque le niveau détecté est inférieur à une valeur prédéfinissable, un état inactif du terminal de communication multimédia (TV1...n) respectif est déterminé, et
- **en ce qu'**au moins une information d'état représentant l'état actif resp. inactif est transmise audit au moins un réseau de communication multimédia, et
- **en ce qu'**en fonction de ladite au moins une information d'état (pn) transmise, les ressources de commutation et de transmission (zr) assignées demeurent assignées ou sont libérées.

2. Méthode selon la revendication 1,
**caractérisée en ce que**
en fonction de ladite au moins une information d'état (pn) transmise, les ressources de commutation et de transmission (zr) dudit au moins un réseau de communication multimédia (BPON), nécessaires à une transmission d'information à destination et/ou en provenance dudit au moins terminal de communication multimédia (TV1...n), sont demandées.

3. Méthode selon l'une des revendications précédentes,
**caractérisée en ce que**
ledit au moins un réseau de communication multimédia (BPON) est disposé entre au moins une unité de contrôle de réseau (OLT) et au moins une unité de raccordement d'abonné (ONU),
- ladite au moins une unité de contrôle de réseau (OLT) étant reliée à au moins un réseau de communication multimédia d'ordre supérieur (OKN), et
- ledit au moins un terminal de communication multimédia (TV1...n) étant raccordé par l'intermédiaire d'au moins une unité de terminaison de réseau multimédia (STB1...n) à ladite au moins une unité de raccordement d'abonné (ONU).

4. Méthode selon l'une des revendications précédentes,
**caractérisée en ce que**
les ressources de commutation et de transmission (vr) du réseau de communication multimédia (BPON) sont réalisées par au moins une liaison virtuelle fonctionnant selon le mode de transfert asynchrone.

5. Méthode selon la revendication 4,
**caractérisée en ce que**
ladite au moins une liaison virtuelle est attribuée à au moins une source de données multimédia disposée dans le réseau de communication multimédia (BPON) ou dans le réseau de communication multimédia d'ordre supérieur (OKN).

6. Méthode selon l'une des revendications précédentes,
**caractérisée en ce que**
le niveau de la puissance électrique amenée audit au moins un terminal de communication multimédia (TV1...n) est évalué par une mesure de tension ou de courant ou de puissance.

7. Méthode selon l'une des revendications précédentes,
**caractérisée en ce que**
l'information d'état (pn) est insérée dans un message de protocole adapté audit au moins un réseau de communication multimédia (BPON).

8. Dispositif de communication pour l'utilisation optimale de ressources de commutation et de transmission (vr) de réseaux de communication multimédia (BPON),
avec au moins un terminal de communication multimédia (TV1...n) attribué audit au moins un réseau de communication multimédia (BPON),
avec des moyens d'assignation de ressources destinés à assigner des ressources de commutation et de transmission (zr) dudit au moins un réseau de communication multimédia (BPON) en vue d'une transmission d'information à destination et/ou en provenance dudit au moins un terminal de communication multimédia (TV1...n),
**caractérisé en ce que**
- il est prévu
-- des moyens de détection destinés à détecter le niveau d'une puissance électrique amenée audit au moins un terminal de communication multimédia (TV1...n) et à déterminer un état actif ou inactif du terminal de communication multimédia (TV1...n) respectif en fonction du résultat de détection,
-- des moyens de génération destinés à générer au moins une information d'état (pn) représentant l'état actif et/ou l'état inactif respectif, et
-- des moyens de transmission destinés à transmettre ladite au moins une information d'état (pn) audit au moins un réseau de communication multimédia (BPON),
- **en ce que** les moyens de détection sont configurés de telle sorte que lorsque le niveau détecté de la puissance électrique amenée est supérieur à une valeur prédéfinissable, l'état actif est déterminé et lorsque le niveau détecté est inférieur à une valeur prédéfinissable, l'état inactif du terminal de communication multimédia (TV1...n) respectif est déterminé,
- **en ce que** les moyens d'assignation de ressources sont configurés de telle sorte qu'en fonction de ladite au moins une information d'état (pn) transmise, les ressources de commutation et de transmission (zr) assignées demeurent assignées ou sont libérées.

9. Dispositif de communication selon la revendication 8,
**caractérisé en ce que**
les moyens d'assignation de ressources sont configurés de telle sorte qu'en fonction de ladite au moins une information d'état (pn) transmise, les ressources de commutation et de transmission (zr) dudit au moins un réseau de communication multimédia (BPON), nécessaires à une transmission d'information à destination et/ou en provenance dudit au moins un terminal de communication multimédia (TV1...n), sont demandées.

10. Dispositif de communication selon la revendication 8 ou 9,
**caractérisé en ce que**
ledit au moins un réseau de communication multimédia (BPON) est disposé entre au moins une unité de contrôle de réseau (OLT) et au moins une unité de raccordement d'abonné (ONU),
- ladite au moins une unité de contrôle de réseau (OLT) étant reliée à au moins un réseau de communication multimédia d'ordre supérieur (OKN), et
- ledit au moins un terminal de communication multimédia (TV1...n) étant raccordé par l'intermédiaire d'au moins une unité de terminaison de réseau multimédia (STB1...n) à ladite au moins une unité de raccordement d'abonné (ONU).

11. Dispositif de communication selon l'une des revendications 8 à 10,
**caractérisé en ce que**
ledit au moins un réseau de communication multimédia (BPON) est configuré selon le mode de transfert asynchrone,
**en ce que** les ressources de commutation et de transmission dudit au moins un réseau de communication multimédia (BPON) sont réalisées par au moins une liaison virtuelle fonctionnant selon le mode de transfert asynchrone.

12. Dispositif de communication selon la revendication 11,
**caractérisé en ce que**
ladite au moins une liaison virtuelle est attribuée à au moins une source de données disposée dans le réseau de communication multimédia (BPON) ou dans le réseau de communication multimédia d'ordre supérieur (OKN).

13. Dispositif de communication selon l'une des revendications 10 à 12,
**caractérisé en ce que**
les moyens de détection, les moyens de génération et les moyens de transmission sont disposés dans ladite au moins une unité de terminaison de réseau multimédia (STB1...n).

14. Dispositif de communication selon l'une des revendications 8 à 13,
**caractérisé en ce que**
les moyens de détection sont configurés de telle sorte que le niveau de puissance électrique amenée audit au moins un terminal de communication multimédia (TV1...n) est évalué par une mesure de tension ou de courant ou de puissance.

15. Unité de terminaison de réseau multimédia (STB1...n) destinée au raccordement d'au moins un terminal de communication multimédia (TV1) à au moins un réseau de communication multimédia (BPON),
**caractérisée en ce que**
- dans l'unité de terminaison de réseau multimédia (STB1...n) sont disposés
-- des moyens de détection destinés à détecter le niveau d'une puissance électrique amenée audit au moins un terminal de communication multimédia (TV1...n) et à déterminer un état actif ou inactif du terminal de communication multimédia (TV1...n) respectif en fonction du résultat de détection,
-- des moyens de génération destinés à générer au moins une information d'état (pn) représentant l'état actif et/ou l'état inactif respectif, et
-- des moyens de transmission destinés à transmettre ladite au moins une information d'état (pn) audit au moins un réseau de communication multimédia (BPON),
- **en ce que** les moyens de détection sont configurés de telle sorte que lorsque le niveau détecté de la puissance électrique amenée est supérieur à une valeur prédéfinissable, l'état actif est déterminé et lorsque le niveau détecté est inférieur à une valeur prédéfinissable, l'état inactif du terminal de communication multimédia (TV1...n) respectif est déterminé.

16. Unité de terminaison de réseau multimédia (STB1...n) selon la revendication 15,
**caractérisée en ce que**
des moyens d'alimentation en énergie (EV1) destinés à l'alimentation en énergie dudit au moins un terminal de communication multimédia (TV1) raccordé sont prévus, les moyens de détection étant attribués aux moyens d'alimentation en énergie (EV1).

17. Unité de terminaison de réseau multimédia (STB1...n) selon la revendication 15 ou 16,
**caractérisée en ce que**
les moyens de détection sont configurés de telle sorte que le niveau de la puissance électrique amenée audit au moins un terminal de communication multimédia (TV1...n) est évalué par une mesure de tension ou de courant ou de puissance.
